# EUROPEAN PATENT SPECIFICATION

(11) **EP 0 484 156 B1**
(45) Date of publication and mention of the grant of the patent: **17.05.1995**
(21) Application number: 91310069.9
(22) Date of filing: 31.10.1991
(51) Int. Cl.: C05F 17/02

(54) **Garbage processing device**
Müllbehandlungsvorrichtung
Dispositif de traitement d'ordures

(30) Priority: 31.10.1990 JP 295093/90
(43) Date of publication of application: 06.05.1992
(73) Proprietor: O.K. LABORATORIES CO., LTD, Okegawa-shi, Saitama-ken (JP)
(72) Inventor: Onodera,Kazuo, Okegawa-shi Saitama-ken (JP)
(74) Representative: Hackett, Sean James

(56) References cited:
- EP-A- 0 271 719
- DE-U- 8 813 267

## Description

### BACKGROUND OF THE INVENTION

### Field of the Invention

The present invention concerns an improvement for a garbage disposing device used for fermentative degradation of garbages discharged, for example, from home kitchens and restaurant cookeries.

### Description of the Prior Art

For disposing garbages discharged from home kitchens, they were buried in pits dug, for example, in sunny gardens and degraded by fermentation under the effects of micro-organisms in soils. However, such a natural method has become difficult in view of recent housing problems and, accordingly, garbages discharged from the kitchens are recovered under classification transported to incinerating plants and disposed collectively by self-governing bodies.

However, along with localization of living population or varying food life, amount of garbages discharged in urban districts has been increased remarkably and there has also been a difficulty in installing new incinerating plants which may cause public pollutions due to smokes or offensive odors. Accordingly, it appears that there disposal of garbage by the existent plants will soon reach limit.

In view of the above, the present inventor has already proposed a garbage disposing device using a fermentation promoter (refer to Japanese Patent Laid-Open Sho 62-225299), so that effective fermentation conditions for garbages can be provided artificially. The fermentation promoter used for forming the fermentation conditions is prepared by blending several kinds of mesophilic bacteria, growing and concentrating them while keeping the balance among the blended bacteria and adding an appropriate growing ingredient or a deodoring agent to the concentrates. Such a promoter can effectively fermentate garbages placed within a box of such a size as that of a home garbage bin.

That is, when a predetermined amount of the fermentation promoter is scattered upon charging the garbage in a container. The garbage in the container is put to effective fermentation with elapse of time and effuse as a liquid. Accordingly, the residual amount of the garbage in the container after 1 to 2 months can be decreased to about 1/10 based on the total amount of the garbage charged.

Further, the present inventor has found that when the temperature at the inside of the container is kept at about 50°C in addition to the use of the fermentation promoter, only the bacteria adaptible to such a temperature propagates preferentially and fermentation can be promoted further. As the source for the heat generation, quick lime (calcium oxide) coated with a starch membrane into a granular shape is used as the heat generating agent. When it is scattered on the garbage, the starch membrane is dissolved water discharged from the garbage and the quick lime at the inside reacts with water to strongly generate heat and is converted itself into lime (calcium hydroxide), and the exothermic heat is utilized. In this case, if the thickness of the starch membrane is controlled so as to make the lime of reaction between the quick lime and water different, it is possible to generate heat continuously for the garbage in the container over a long period of time. Other suitable heat generating agent, if any, may also be used.

In the container used exclusively for the garbage disposing device described above, however, disposal of water evaporated by the generation of heat was still insufficient.

European Patent Specification 271719 describes a fermentation bin having an openable lid at one end and sump for collecting condensed water at the lower end. The waste material is kept above the floor of the sump by means of shelf comprising holes for allowing the draining of water from the material into the sump.

### OBJECT OF THE INVENTION

The present invention has been accomplished in view of the foregoing situations and the object thereof is to provide a novel garbage disposing device capable of sufficiently disposing evaporated water.

### SUMMARY OF THE INVENTION

According to the present invention there is provided a waste fermentation device as defined in Claim 1 below.

In an embodiment of the present invention, a garbage disposing device comprises:
a main body having an upper end face inclined at such an angle that water droplets are capable of flowing downward and the body is in a shape of a collapsible cylindrical configuration,
a flat box-shaped member which can be attached to the main body so as to partition the inside thereof into a plurality of vertical chambers, has such a height that a top and thereof protrudes from above the main body in an attached state, has a plurality of perforations formed in the upper portion of the wall surface facing to each of the chambers and in the side wall of the top end and is provided with a water receiving port being protruded through the front wall of the main body and opened upward, and
an opening/closing lid which is hinged on the upper side of each of the chambers of the main body, is attached along the angle of inclination of the upper end face of the main body and has an opening/closing end bent downward, the bent end being formed at such an angle of inclination as capable of flowing water droplets downward toward the water receiving port of the flat box-shaped member.

Upon using the device according to the present invention, water absorbing material is placed at the bottom of the main body or the main body is installed directly on the ground, so that water discharged along with the progress of fermentation is absorbed, and water evaporated from the garbage is discharge through the small perforations formed in the flat box-shaped member to the outside. Further water content condensated on the inner surface of the opening/closing lid is introduced along the slope at the inner surface of the opening/closing lid attached such that the water flows downward on one side to the opening/closing end, which is then introduced along the opening/closing end slanted at a predetermined angle and collected from the water receiving port to the inside of the flat box-shaped member.

Further, in the present invention, the main body is partitioned by the flat box-shaped member into two or more of chambers, so that garbage can be charged alternately to each of the chambers (for example, when one of the chambers is fully charged, it is switched to the other of them for continuous use). When a net-like bag is previously attached to the inside of each of the chambers and the garbage is charged therein, de-volumed residues after disposal by the fermentation effect can be taken out easily.

Further, the main body is made collapsable so that it can be folded and transported in a compact manner.

### DESCRIPTION OF THE ACCOMPANYING DRAWINGS

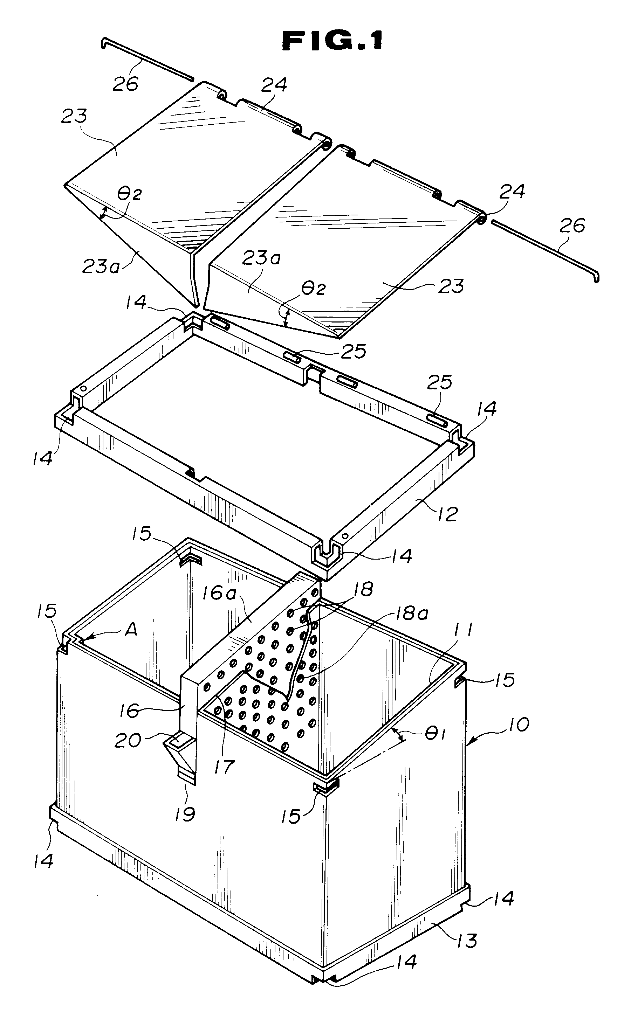

These and other objects, as well as advantageous features of the present invention will become apparent by reading the detailed descriptions for the preferred embodiments according to the present invention with reference to the accompanying drawings, wherein
Fig. 1 is an exploded perspective view of a garbage disposing device as a preferred embodiment according to the present invention;
Fig. 2 is a perspective view of the device in a state of use;
Fig. 3 is a front elevational vertical cross sectional view of the device;

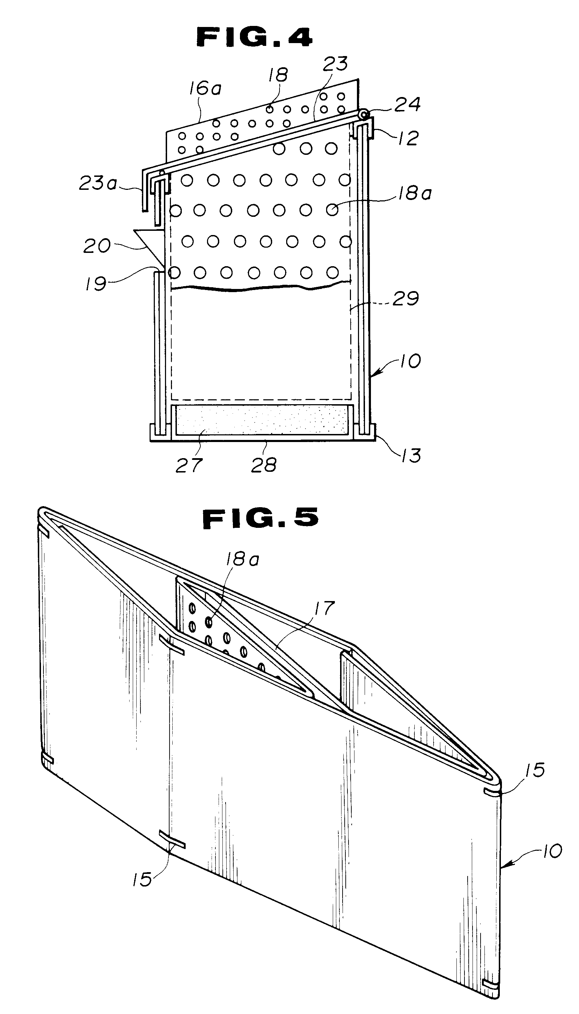

Fig. 4 is a side elevational vertical cross sectional view of the device;
Fig. 5 is a perspective view of the device in a collapsed state; and
Fig. 6 is a perspective view of a garbage disposing device as another embodiment according to the present invention in a state of use.

### DESCRIPTION OF THE PREFERRED EMBODIMENTS OF THE INVENTION

The present invention will now be described by way of its preferred embodiments illustrated in the accompanying drawings.

In the figures, a main body 10 of a garbage disposing device is in a form of a long square box made of a corrugated plastic board, with an upper end face 11 being inclined at an angle ϑ₁. The angle ϑ₁ is so defined that water droplets condensated on the inner surface of an opening/closing lid to be described later can flow downward spontaneously toward an opening/closing end and, more specifically, it is appropriately of about 30°.

As shown in Fig. 5, the main body 10 is collapsable into a flat state upon transportation or storage. The capacity of the main body 10 is determined depending, for example, on the amount of garbage to be charged or the cycle of charging the garbage.

The main body 10 has reinforcing frames 12 and 13 fit to the outer edges at the upper end face and the lower end face, respectively, for reinforcement. Each of the reinforcing frames 12 and 13 is made of a plastic molding product and formed into a U-shaped cross sectional shape, and a recess 14 is formed at each of corners. The main body 10 and the reinforcing frames 12 and 13 can be combined simply and effectively by fitting the reinforcing frames 12 and 13 to the outer edges at the upper end face and the lower end face of the main body 10, respectively, and then pushing inward a portion above (or below) each of the recesses 15 formed at each of the corners of the main body 10 by a finger, whereby the pushed portion protrudes inward in a trigonal shape as shown at A to engage the recess 14.

A flat box-shaped member 16 made of a plastic molding product is provided for partitioning the inside of the main body 10 into a plurality of vertical chambers (two chambers in the illustrated embodiment) and the flat box-shaped member 16 is attached along a guide frame 17 disposed in the main body 10. The guide frame 17 is so made that it can be collapsed integrally with the main body 10.

The flat box-shaped member 16 has such a height that its top end 16a protrudes from the upper end face of the main body 10 in a state it is attached to the main body.

Further, the flat box-shaped member 16 has a plurality of perforations 18 formed in the upper portion of the wall surface facing each of the chambers of the main body 10 and in the side wall of the protruding top end 16a. The perforations 18a serve to intake gases in the main body chamber (such as steams released from the garbage) and discharging them from the top end 16a to the outside. Correspondingly, perforations 18a of the same size as that for the perforations 18 in the flat box-shaped member 16 are also formed to the guide frame 17.

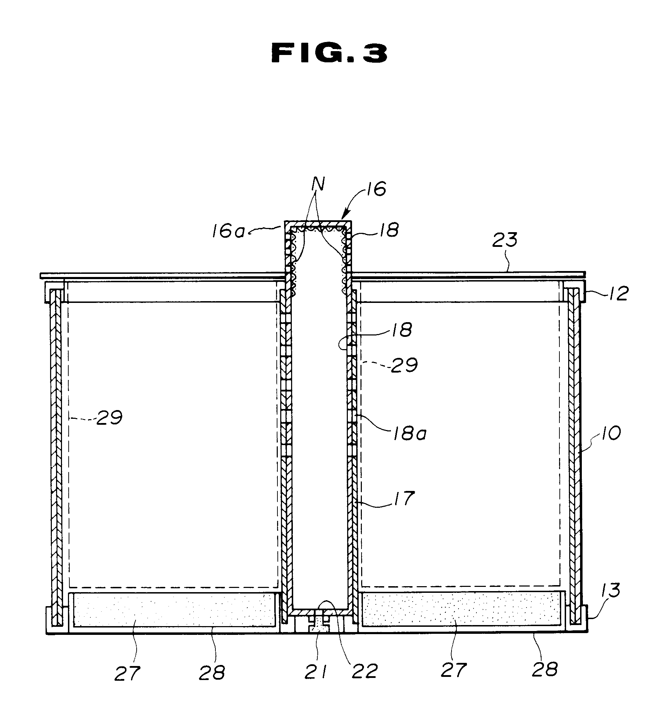

Since the perforations 18 are opened to the side wall of the top end 16a of the flat box-shaped member 16, small insects such as flies may possibly intrude through the apertures. It is, accordingly, preferred to append a red net N to the inner surface of the perforations 18 in the top end 16a in order to prevent intrusion (refer to Fig. 3). It has been confirmed that the use of a red net is effective for repelling insects such as flies.

At the front end face of the flat box-shaped member 16 a water receiving port 20 is disposed, being protruded from a recess 19 formed at the front wall of the main body 10 and opened upward. Further, a drain port (hose) 22 is disposed at the bottom of the flat box-shaped member 16, which is usually closed by a plug 21.

The inside of the main body 10 is partitioned by the flat box-shaped member 16 into two chambers (although not always restricted only to two chambers) so that the garbage can be treated alternately in each of them.

An opening/closing lid 23 is disposed for covering the upper end face for each of the chambers of the main body 10 and it is made of a metal or plastic plate. The lid is hinged to the main body 10 by axially aligning a tubular portion 24 at the base end of the lid with a tubular portion 25 disposed on the higher side of the upper end face for each of the chambers of the main body (upper reinforcing member 12 in this figure) and then passing a hinge shaft 26 therethrough. In this way, the opening/closing lid 23 is attached along the angle of inclination formed to the upper end face of the main body so as to incline downward on one side.

Further, an opening/closing end 23a of the opening/closing lid 23 is bent downward. The bent end 23a is slanted at an angle of inclination ϑ₂ toward the water receiving port 20 of the flat box-shaped member 16 so that water droplets can flow downward to the port 20. The angle ϑ₂ is also defined to about 30° like that the angle ϑ₁ described above. That is, water droplets condensated on the inner surface of the opening/closing lid 23 flow spontaneously downward along the slope of the lid 23 toward the opening/closing end 23a, and water droplets collected at the opening/closing end 23a are then turned downward along the end edges, dripped from the inclined lower end to the water receiving port 20 and then contained within the flat box-shaped member 16.

A water absorbing material 27 is placed on a tray 28 disposed at the bottom of the main body 10, and the absorbing material 27 is used for absorbing water discharged along with fermentation. The absorbing material is commercially available under the trade name of Vermiculite. In a case of installing the main body 10 outdoor, the ground soils per se serve as a substitute for the absorbing material 27.

A net-like bag 29 is previously attached to the inside of each of the chambers of the main body 10, which is used for facilitating the recovery of residues of the disposed garbage, the volume of which is reduced under the effect of fermentation. The net-like bag 29 is used for allowing the water discharged from the garbage to permeate therethrough. As the net-like bag 29, a perforated bag made of a plastic film may be used, in which the pore size for each of the apertures has to be greater than 6 mm⌀. If the pore size is less than 6 mm⌀, the pores may be clogged with oil membrane or the like.

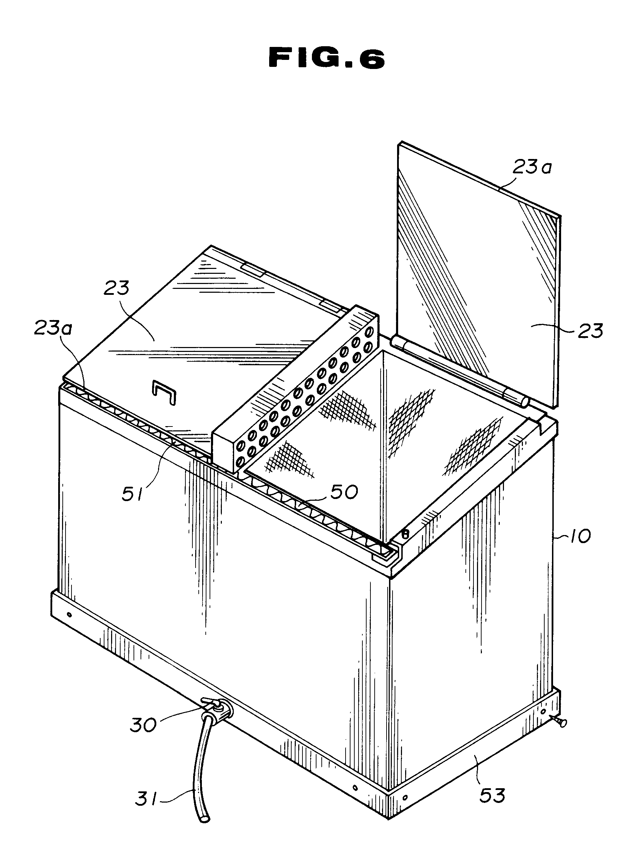

Fig. 6 shows another embodiment of the present invention. The fundamental constitution of this modified embodiment is substantially the same as that of the previous embodiment, excepting that the opening/closing end 23a of the opening/closing lid 23 is aligned with grooves 50 in the core of the corrugated plastic board of the main body 10 so that the grooves 50 in the board core can be utilized as a water receiving port 51. In this embodiment, water flowing into the grooves 50 of the board core is collected by the lower reinforcing frame 53 not having the recess 14 of the previous embodiment and water is drained by means of a cock 30 disposed to the water collecting portion by way of a hose 31.

Description will now be made to the method of assembling and using the device according to the present invention illustrated in this embodiment.

The main body 10 is initially collapsed as shown in Fig. 5 and it is, at first, developed into a square box-like configuration and the lower reinforcing frame 13 is fit to the circumferential edge at the lower end face of the main body 10. Subsequently, each portion below the recess formed at each of the corners of the main body is pushed inward to engage the recess 14 of the lower reinforcing frame 13. Then, the flat box-shaped member 16 is inserted into the guide frame 17 formed in the main body 10 to partition the inside of the main body 10 into two chambers. Then, the upper reinforcing frame 12 is fit to the upper end face of the main body 10, and each portion above the recess formed at each of the corners is pushed inward to engage the recess 14 of the upper reinforcing frame 12 in the same manner.

Subsequently, the opening/closing lid 23 is hinged to the higher side of the upper reinforcing frame 12 and attached along the slope at the upper end face of the main body 10 so that it is inclined downward on one side. Then, the tray 28 is disposed at the bottom of the main body 10, on which the water absorbing material 27 is placed and the net-like bag 29 is attached to the inside of each of the chambers. The device of the invention has thus been assembled completely.

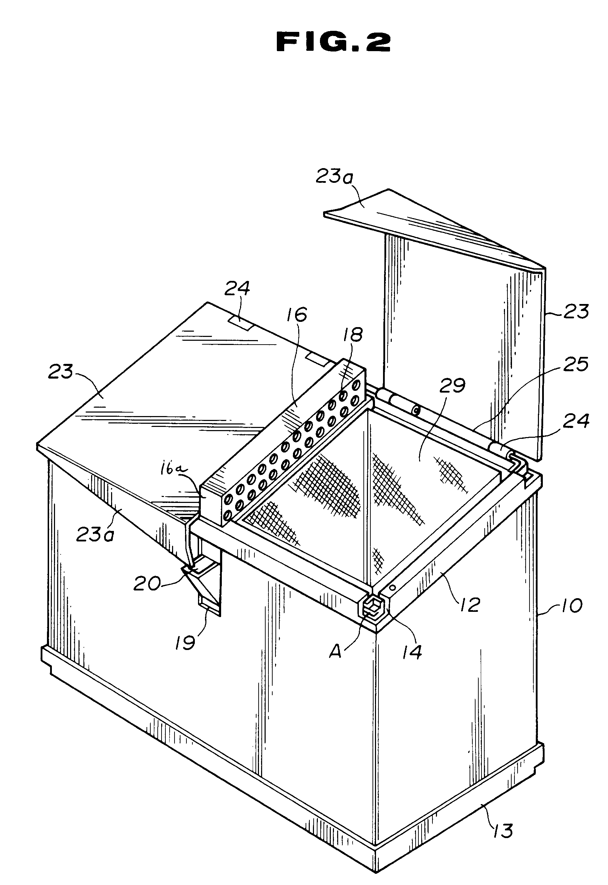

Upon using thus assembled device, the opening/closing lid 23 for one of the chambers of the main body 10 is opened as shown in Fig. 2. Then, a predetermined amount of garbage is charged, over which a fermentation promoter (not illustrated) and a heat generating agent (not illustrated) are scattered each in a predetermined amount and the opening/closing lid 23 is closed.

As the heat generating agent, quick lime coated with a starch membrane into a granular shape can be used satisfactorily. The operation for scattering the predetermined amount of the fermentation promoter and the heat generating agent is conducted on every charging of the garbage. After several weeks or several months, when the inside of one of the chambers is fully charged, garbage is charged into the other of the chambers. In this case, fermentation for the garbage that has been charged into one of the chambers is promoted under the effect of the fermentation promoter and the heat generating agent with elapse of time. The garbage charged in the main body 10 undergoes fermentation in the main body kept at about 50°C under the effect of the heat generating agent, in which water discharged from the garbage during fermentation is absorbed into the water absorbing material 27, while a portion of evaporated water is released through the perforations 18 of the flat box-shaped member 16 to the outside of the main body.

Further, water condensated into droplets on the inner surface of the opening/closing lid 23 flows spontaneously downward along the slope at the inner surface thereof toward the opening/closing end 23a and, finally, contained in the flat box-shaped member 16.

As a result, the volume of the garbage fully charged to the inside of one of the chambers is reduced to about 1/10 till the other of the chambers is fully charged with the garbage (about 1 to 2 months) and the water content in the residues of the garbage is also decreased remarkably.

In this case, since drained water of fermentation or residues emit no offensive odors, there is neither trouble of being bothered by offensive odors nor contaminations to and hands or cloths upon handling such as discarding of garbage or exchange for the chambers of the main body.

While the present invention has been described regarding the preferred embodiments, the invention is not restricted only thereto.

For example, the cross sectional shape of the outer container is not restricted only to the rectangular shape but it may be in other polygonal or circular cross section.

As has been described above, the garbage disposing device according to the present invention comprises a main body in the form of a collapsable elongate square cylinder with an upper end face being formed at such an angle of inclination as capable of flowing water droplets downward and a flat box-shaped member that can be attached so as to partition the inside of the main body into a plurality of vertical chambers, having such a height as its top end protrudes in a attached state, having a plurality of perforations in the upper portion of the wall surface facing to each of the chambers and in the side wall of the top end, a water receiving port being protruded from the front wall of the main body and opened upward, and further having a water drain port disposed to the bottom of the main body, and a opening/closing lid hinged to the higher side of each of the chambers of the main body, attached along the angle of inclination of the upper end face of the main body, having an opening/closing end bent downward at such an angle of inclination that water droplets can flow downward to the water receiving port of the flat box-shaped member.

Accordingly, water evaporated from the garbage is discharged through the perforations of the flat box-shaped member to the outside, water condensated on the inner surface of the opening/closing lid is introduced along the slope to the opening/closing end, flows downward along the angle of inclination of the opening/closing end and then contained from the water receiving port into the flat box-shaped member, so that evaporated water can surely be disposed.

Further, since the main body is partitioned by the flat box-shaped member into a plurality of vertical chambers and the garbage can be contained and disposed alternately in each of the chambers (such that a fully discharged chamber can be replaced with other chamber for continuous use), effective disposal is enabled.

Furthermore, the main body is collapsable and can be transported or stored in a state folded compact.

## Claims

1. A waste fermentation device comprising a main body (10) open at an upper end for receiving waste material to be fermented,
a drain means (20, 50) formed in the device for collecting water condensed in the main body, and
a lid (23) for opening/closing the open end of the main body
characterized in that:
said main body (10) is open at both ends so as to be collapsible for packaging purposes,
a partition member (16) is provided, which can be positioned within the main body so as to divide the main body (10) into a plurality of open-ended chambers for receiving the waste material to be fermented, the partition member (16) being provided with perforations (18) and a drain whereby water can drain from the chambers by passing through perforations and into the drain; and
said lid (23) is inclined when closed so as to direct water condensing on the undersurface of the lid (23) to flow into said drain means (20, 50) provided in the device.

2. A waste fermentation device according to claim 1, wherein the drain means (20) is formed from a downwardly inclined edge means (23a) extending from the lid when closed, the downwardly inclined edge means (23a) being arranged for directing water condensed on the undersurface of the lid to flow into the drain of the partition member (16).

3. A waste fermentation device according to claim 1, wherein the drain means (20) is formed from a plurality downwardly inclined channels (50) provided in a wall portion of the main body (10), the lid (23) having an edge portion (23a) which lies above openings (51) into the downwardly inclined channels (50) when the lid is closed.

4. A waste fermentation device according to claim 3, wherein the downwardly inclined channels (50) are formed by grooves of a corrugated plastics board.

5. A waste fermentation device according to claim 1, wherein
said main body (10) has an upper end face (11) inclined at such an angle ( ϑ₁) as capable of flowing water droplets downward and in a shape of a collapsible cylindrical configuraion,
said partition member (16) is formed in a flat box-shaped member (16) which can be attached to said main body (10) so as to partition the inside thereof into a plurality of vertical chambers, has such a height that a top (16a) thereof protrudes from above said main body in an attached state, has the plurality of perforations (18) farmed in the upper portion of the wall surface facing to each of the chambers and in the side wall of the top end and is provided with a water receiving port (20) being protruded through the front wall of said main body and opened upward, and
said opening/closing lid (23) is hinged on the upper side of each of the chambers of said main body, is attached along the angle of inclination of the upper end face of said main body and has an opening/closing end (23a) bent downward, said bent end being formed at such an angle of inclination ( ϑ₂) as capable of flowing water droplets downward toward the water receiving port (20) of said flat box-shaped member.

6. A waste fermentation device according to claim 1, wherein
said collapsible main body (10) is formed in a cylindrical shape made of a corrugated plastic board with the grooves (50) of a board core being in the vertical direction and having an upper end face (11) with such an angle of inclination (0₁) as capable of flowing water droplets downward,
said partition member (16) is formed in a flat box-shaped member which can be attached to said main body so as to partition the inside of said main body into a plurality of vertical chambers, has a plurality of perforations (18) formed in the upper portion of the wall surface facing to each of the chambers and in the side wall of the top end, is provided with a water receiving port (20) being protruded through the front wall of said main body and opened upward and is further provided with a water draining port (31) disposed at the lower portion,
said opening/closing lid (23) is hinged on the higher side of each of the chambers of said main body (10) and is attached along the angle of inclination of the upper end face of said main body, with an opening/closing end (23a) thereof being aligned with the grooves (50) of the board core opened at the upper end face on the lower side of said main body, and
said drain mains (20, 50) collectes and discharges water flowing into the grooves of the board core of said main body.

7. A waste fermentation device as defined in claim 5 or 6, wherein the cylindrical main body is in a elongate rectangular shape, and the flat box-shaped member is attached such that it intersects the longitudinal direction of the elongate rectangular shape.

## Patentansprüche

1. Abfallfermentiervorrichtung, umfassend einen an einem oberen Ende offenen Hauptkörper (10) zum Aufnehmen von zu fermentierendem Abfallgut,
eine in der Vorrichtung ausgebildete Abflußeinheit (20, 50) zum Sammeln von im Hauptkörper kondensiertem Wasser und
einen Deckel (23) zum Öffnen/Schließen des offenen Endes des Hauptkörpers,
dadurch gekennzeichnet, daß
der Hauptkörper (10) an beiden Enden offen ist, so daß er für Verpackungszwecke zusammenklappbar ist,
ein Trennelement (16) vorgesehen ist, das im Hauptkörper positionierbar ist, um den Hauptkörper (10) in mehrere offenendige Kammern zum Aufnehmen des zu fermentierenden Abfallguts zu unterteilen, wobei das Trennelement (16) mit Perforationen (18) und einem Abfluß versehen ist, so daß Wasser aus den Kammern durch Passieren der Perforationen und Fließen in den Abfluß abfließen kann, und
der Deckel (23) im Schließzustand so geneigt ist, daß er an der Unterseite des Deckels (23) kondensierendes Wasser zum Fließen in die in der Vorrichtung vorgesehene Abflußeinheit (20, 50) leitet.

2. Abfallfermentiervorrichtung nach Anspruch 1, wobei die Abflußeinheit (20) aus einem nach unten geneigten Kantenmittel (23a), das vom Deckel, wenn dieser geschlossen ist, abgeht, geformt ist, und wobei das abwärts geneigte Kantenmittel (23a) zum Leiten von an der Unterseite des Deckels kondensierendem Wasser zum Fließen in den Abfluß des Trennelements (16) angeordnet ist.

3. Abfallfermentiervorrichtung nach Anspruch 1, wobei die Abflußeinheit (20) aus einer Anzahl von in einem Wandabschnitt des Hauptkörpers (10) vorgesehenen, abwärts geneigten Profilen (50) geformt ist, und wobei der Deckel (23) einen Kantenabschnitt (23a) aufweist, der bei geschlossenem Deckel oberhalb von Öffnungen (51) in die abwärts geneigten Profile (50) liegt.

4. Abfallfermentiervorrichtung nach Anspruch 3, wobei die abwärts geneigten Profile (50) durch Rillen einer gewellten Kunststofflage geformt sind.

5. Abfallfermentiervorrichtung nach Anspruch 1, wobei
der Hauptkörper (10) eine obere Stirnfläche (11) aufweist, die unter einem solchen Winkel (ϑ₁), daß Wassertröpfchen herabfließen können, geneigt ist, und in einer Form einer zusammenklappbaren zylindrischen Konfiguration vorliegt,
das Trennelement (16) als flaches kastenförmiges Element (16) geformt ist, das am Hauptkörper (10) anbringbar ist zwecks Unterteilung seines Inneren in eine Anzahl von lotrechten Kammern, eine solche Höhe aufweist, daß eine Oberseite (16a) desselben in einem angebrachten Zustand über den Hauptkörper hinaus vorsteht, die Vielzahl von Perforationen (18) im oberen Abschnitt der jeder der Kammern zugewandten Wandfläche sowie in der Seitenwand des oberen Endes geformt aufweist und mit einer Wasseraufnahmeöffnung (20), welche die vordere Wand des Hauptkörpers durchsetzt und sich aufwärts öffnet, versehen ist und
der Öffnungs/Schließ-Deckel (23) an der Oberseite jeder der Kammern des Hauptkörpers (scharnierartig) angelenkt ist, längs des Neigungswinkels der oberen Stirnfläche des Hauptkörpers angebracht ist und ein abwärts abgebogenes Öffnungs/Schließende (23a) aufweist, welches abgebogene Ende unter einem solchen Neigungswinkel (ϑ₂) ausgebildet ist, daß Wassertröpfchen abwärts in Richtung auf die Wasseraufnahmeöffnung (20) des flachen kastenförmigen Elements zu fließen vermögen.

6. Abfallfermentiervorrichtung nach Anspruch 1, wobei
der zusammenklappbare Hauptkörper (10) mit einer zylindrischen Form aus einer gewellten Kunststofflage geformt ist, wobei die Rillen (50) eines Lagenkerns in der Vertikalrichtung liegen, und eine obere Stirnfläche (11) mit einem solchen Neigungswinkel (O₁), daß sie Wassertröpfchen abwärts fließen lassen kann, aufweist,
das Trennelement (16) als flaches kastenförmiges Element geformt ist, das am Hauptkörper anbringbar ist zwecks Unterteilung des Inneren des Hauptkörpers in eine Anzahl von lotrechten Kammern, im oberen Abschnitt der jeder der Kammern zugewandten Wandfläche und in der Seitenwand des oberen Endes eine Vielzahl von darin ausgebildeten Perforationen (18) aufweist, mit einer Wasseraufnahmeöffnung (20), welche die vordere Wand des Hauptkörpers durchsetzt und sich aufwärts öffnet, versehen ist und ferner mit einer am unteren Abschnitt angeordneten Wasserabflußöffnung (31) versehen ist,
der Öffnungs/Schließ-Deckel (23) an der höheren Seite jeder Kammern des Hauptkörpers (10) (scharnierartig) angelenkt und längs des Neigungswinkels der oberen Stirnfläche des Hauptkörpers angebracht ist, wobei ein Öffnungs/Schließ-Ende (23a) desselben an der tieferen Seite des Hauptkörpers auf die sich an der oberen Stirnfläche öffnenden Rillen (50) des Lagenkerns ausgerichtet ist, und
die Abflußeinheit (20, 50) das in die Rillen des Lagenkerns des Hauptkörpers fließende Wasser sammelt und abführt.

7. Abfallfermentiervorrichtung nach Anspruch 5 oder 6, wobei der zylindrische Hauptkörper eine langgestreckt rechteckige Form besitzt und das flache kastenförmige Element so angebracht ist, daß es die Längsrichtung der langgestreckt rechteckigen Form schneidet.

## Revendications

1. Dispositif de fermentation de déchet comprenant un corps principal (10) ouvert à sa partie supérieure pour recevoir la matière de déchet devant être fermentée,
un moyen d'évacuation (20, 50) formé dans le dispositif de recueil de l'eau condensée dans le corps principal, et
un couvercle (23) pour ouvrir et fermer la partie ouverte du corps principal,
caractérisé en ce que :
ledit corps principal (10) est ouvert au niveau de ses deux parties de manière à être pliable dans un but d'emballage,
un élément de division (16) est présent, qui peut être positionné à l'intérieur du corps principal de manière à diviser le corps principal (10) en une pluralité de chambres à extrémité ouverte pour recevoir la matière des déchets devant être fermentée, l'élément de division (16) étant pourvu de perforations (18) et d'un orifice par lequel l'eau peut être évacuée depuis les chambres en passant à travers les perforations et dans l'orifice ; et
ledit couvercle (23) est incliné lorsqu'il est fermé de manière à diriger l'eau condensée sur la face du dessous du couvercle (23) pour qu'elle s'écoule à l'intérieur dudit moyen d'évacuation (20, 50) présent dans le dispositif.

2. Dispositif de fermentation de déchet selon la revendication 1, dans lequel le moyen d'évacuation (20) est formé à partir d'un moyen formant bordure inclinée vers le bas (23a) qui s'étend depuis le couvercle lorsqu'il est fermé, le moyen de bordure inclinée vers le bas 23a étant agencé pour diriger l'eau condensée sur la face du dessous du couvercle pour qu'elle s'écoule dans l'orifice de l'élément de division (16).

3. Dispositif de fermentation de déchet selon la revendication 1, dans lequel le moyen d'évacuation (20) est constitué d'une pluralité de rainures inclinées vers le bas (50) présentes dans une partie de la paroi du corps principal (10), le couvercle (23) ayant une partie formant bordure (23a) qui se trouve au-dessus des ouvertures (51) dans les rainures inclinées vers le bas (50) lorsque le couvercle est fermé.

4. Dispositif de fermentation de déchet selon la revendication 3, dans lequel les rainures inclinées vers le bas (50) sont formées par les rainures des plaques ondulées en matière plastique.

5. Dispositif de fermentation de déchet selon la revendication 1, dans lequel ledit corps principal (10) comporte une face supérieure (11) inclinée suivant un angle tel (0₁) que l'écoulement de gouttelettes d'eau vers le bas est possible et qui est conformé comme un cylindre pliable,
ledit élément de division (16) est constitué d'un élément plat en forme de boîte (16) qui peut être fixé audit corps principal (10) de manière à diviser l'intérieur de celui-ci en une pluralité de chambres verticales, possède une hauteur telle que la partie supérieure (16a) de celui-ci fait saillie au-dessus dudit corps principal après fixation, a sa pluralité de perforations (18) formée dans la partie supérieure de la face de paroi qui fait face à chacune des chambres et dans la paroi latérale de la partie supérieure et est pourvue d'un orifice récepteur d'eau (20) qui fait saillie à travers la paroi frontale dudit corps principal et qui est ouvert vers le haut, et
ledit couvercle ouvrant/fermant 23 est fixé par charnière sur la partie supérieure de chacune des chambres dudit corps principal, est fixé suivant l'angle d'inclinaison de la face supérieure dudit corps principal et comporte une partie ouvrante/fermante (23a) courbée vers le bas, ladite partie courbe étant formée avec un angle d'inclinaison (ϑ₂) tel qu'elle permet l'écoulement vers le bas des gouttelettes d'eau vers l'orifice récepteur d'eau (20) dudit élément plat en forme de boîte.

6. Dispositif de fermentation de déchet selon la revendication 1, dans lequel
ledit corps principal pliable (10) est en forme de cylindre réalisé à partir d'une plaque ondulée en matière plastique, les rainures (50) du coeur de la plaque étant dans le sens vertical et comportant une face supérieure (11) formant un angle d'inclinaison tel (ϑ₁) qu'elle rend possible l'écoulement des gouttelettes d'eau vers le bas,
ledit élément de division (16) est constitué d'un élément plat en forme de boîte qui peut être fixé audit corps principal de manière à diviser l'intérieur dudit corps principal en une pluralité de chambres verticales, comporte une pluralité de perforations (18) formées dans la partie supérieure de la face de la paroi faisant face à chacune des chambres et dans la paroi latérale de la partie supérieure, est pourvu d'un orifice récepteur d'eau (20) qui fait saillie à travers la paroi frontale dudit corps principal et qui est ouvert vers le haut et est en outre pourvu d'un orifice d'évacuation d'eau (31) disposé dans la partie inférieure,
ledit couvercle ouvrant/fermant (23) est fixé par charnière sur la partie supérieure de chacune des chambres dudit corps principal (10) et est fixé en suivant l'angle d'inclinaison de la face supérieure dudit corps principal, la partie ouvrante/fermante (23a) de celui-ci étant alignée avec les rainures (50) du coeur de la plaque ouverte au niveau de la face supérieure à la partie inférieure dudit corps principal, et
ledit moyen d'évacuation (20, 50) recueille et déverse l'eau qui s'écoule dans les rainures du coeur de la plaque dudit corps principal.

7. Dispositif de fermentation de déchet selon la revendication 5 ou 6, dans lequel le corps principal cylindrique a une forme rectangulaire allongée, et l'élément plat en forme de boîte est fixé de telle sorte qu'il coupe le sens longitudinal de la forme rectangulaire allongée.
